# FASCICULE DE BREVET EUROPEEN

(11) **EP 4 054 824 B1**
(45) Date de publication et mention de la délivrance du brevet: **21.06.2023**
(21) Numéro de dépôt: 20797510.3
(22) Date de dépôt: 03.11.2020
(51) Int. Cl.: B29C 49/42, B29C 49/02, B29C 49/06, B29K 67/00, B29L 31/00

(54) **PROCÉDÉ DE GUIDAGE D'UNE PRÉFORME REDRESSÉE DANS UN INTERSTICE D'UN DISPOSITIF D'ALIGNEMENT ET DE REDRESSEMENT DE PRÉFORMES ET DISPOSITIF D'ALIGNEMENT ET DE REDRESSEMENT ASSOCIÉ**
VERFAHREN ZUM FÜHREN EINES BEGRADIGTEN VORFORMLINGS IN EINEM SPALT IN EINER VORRICHTUNG ZUM AUSRICHTEN UND BEGRADIGEN VON VORFORMLINGEN SOWIE AUSRICHT- UND BEGRADIGUNGSVORRICHTUNG
METHOD FOR GUIDING A STRAIGHTENED PREFORM IN A GAP IN A DEVICE FOR ALIGNING AND STRAIGHTENING PREFORMS, AND ASSOCIATED ALIGNING AND STRAIGHTENING DEVICE

(30) Priorité: 05.11.2019 FR 1912365
(43) Date de publication de la demande: 14.09.2022
(73) Titulaire: Sidel Participations, 76930 Octeville-sur-Mer (FR)
(72) Inventeur: MAZO, Eric, 76930 Octeville-sur-Mer (FR); WILLIG, Frédéric, 76930 Octeville-sur-Mer (FR); DEBRIS, Anthony, 76930 Octeville-sur-Mer (FR); BERTIN, Pascal, 76930 Octeville-sur-Mer (FR)
(74) Mandataire: Sidel Group
(86) Numéro de dépôt international: PCT/EP2020/080756
(87) Numéro de publication internationale: WO 2021/089510

(56) Documents cités:
- WO-A1-2007/085409
- FR-A1- 2 556 273
- US-A1- 2009 095 598
- US-A1- 2018 086 570

## Description

### Domaine technique de l'invention

L'invention concerne un procédé de guidage d'une préforme axisymétrique redressée dans un dispositif d'alignement et de redressement de préformes, la préforme comportant :
- une collerette de support délimitée radialement vers l'extérieur par un bord, la collerette présentant un diamètre externe dit "diamètre de collerette" ;
- un corps présentant un diamètre externe maximal, dit "diamètre de corps", qui est inférieur au diamètre de collerette ;
   et le dispositif d'alignement et de redressement comportant :
   - un plateau circulaire horizontal tournant autour d'un axe vertical destiné à entraîner les préformes d'amont en aval ;
   - un rail fixe dont une face externe de support supérieure s'étend au même niveau qu'une face interne de support supérieure du plateau tournant, le rail formant un arc de cercle centré sur l'axe de rotation du plateau tournant ;
   - un interstice périphérique délimité radialement entre un bord externe du plateau tournant et le rail, l'interstice présentant une largeur radiale constante comprise entre le diamètre de corps et le diamètre de collerette pour permettre le redressement de la préforme par passage du corps à travers ledit interstice, la collerette étant soutenue de manière conjointe par la face interne de support et par la face externe de support. Des procédés et des dispositifs de guidade de préformes selon l'art antérieur sont décrits dans les documents US2009/095598A1, WO2007/085409A1 et FR2556273A1.

### Arrière-plan technique

Le procédé est destiné à être mis en oeuvre dans un dispositif d'alignement et de redressement de préformes faisant partie d'une installation de fabrication de récipients en matériau thermoplastique et notamment en polyéthylène téréphtalate (PET) par formage, notamment par soufflage ou étirage-soufflage, de préformes. Une telle installation permet de produire des récipients en très grande série à des cadences très élevées, par exemple supérieures à 85000 bouteilles par heure.

Selon une technique bien connue, de tels récipients sont produits en deux étapes principales. Dans une première étape, on procède au moulage par injection ou par injection-compression d'une préforme en PET. Cette préforme comporte un corps sensiblement tubulaire qui est fermé à l'une de ses extrémités axiales, l'extrémité opposée étant ouverte par l'intermédiaire d'un col. Le col présente, dès cette opération de moulage par injection, la forme définitive du col du récipient.

Il existe des installations dans lesquelles les préformes, une fois injectées, sont directement transmises vers la station de formage, chaque préforme étant transportée individuellement.

Toutefois, dans de nombreux cas, les préformes sont fabriquées par injection en un premier endroit et sont moulées par soufflage à la forme définitive du récipient en un second endroit sur une installation de fabrication spécifique. Une telle technologie permet de procéder à l'opération de moulage par soufflage le plus près possible du lieu d'embouteillage, l'opération d'injection pouvant être effectuée en n'importe quel endroit. En effet, il est relativement aisé et peu coûteux de transporter des préformes de taille réduite, tandis que transporter des récipients après soufflage présente l'inconvénient d'être économiquement peu rentable du fait de leur volume très important.

Dans le cas où la station d'injection et l'installation de fabrication par formage sont deux machines totalement indépendantes, les préformes sont généralement livrées en vrac. La station de soufflage dispose donc d'un dispositif d'alignement en une file et de redressement des préformes. La présente invention concerne un tel dispositif.

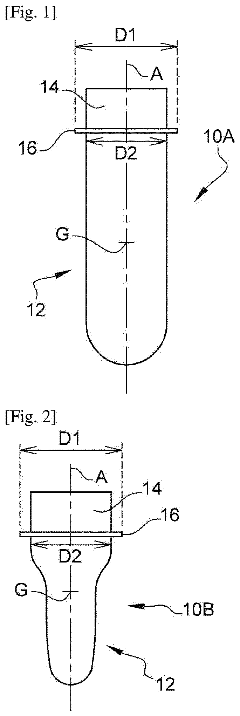

On a représenté aux figures 1 à 3 des exemples non limitatifs de préformes 10A, 10B, 10C susceptibles d'être prise en charge par un dispositif d'alignement et de redressement.

On décrit tout d'abord les caractéristiques communes aux préformes 10A, 10B, 10C. Une telle préforme 10A, 10B, 10C est réalisée en matériau thermoplastique, ici en polyéthylène téréphtalate (PET). Elle est classiquement obtenue par moulage par injection. Elle présente une forme sensiblement axisymétrique autour d'un axe "A" principal représenté verticalement aux figures 1 à 3.

Elle comporte un corps 12 en forme de tube allongé selon l'axe "A" principal présentant une extrémité axiale fermée et qui présente à son extrémité opposée, représentée en haut aux figures 1 à 3, un col 14 ouvert axialement.

La préforme 10A, 10B, 10C comporte aussi une collerette 16 annulaire qui fait saillie radialement par rapport au reste du corps 12. La collerette 16 est délimitée radialement vers l'extérieur par un bord 42. La collerette 16 est agencée au-dessus d'un centre "G" de gravité de la préforme 10A, 10B, 10C. Le terme "annulaire" signifie que la collerette 16 fait le tour de la préforme 10A, 10B, 10C soit de manière continue, soit de manière discontinue.

Lorsque la collerette 16 est discontinue, elle est par exemple formée de segments disjoints qui font le tour de la préforme et qui sont néanmoins suffisamment rapprochés pour que la préforme puisse être soutenue par la face inférieure de sa collerette 16 sur deux supports diamétralement opposés quelle que soit la position de la préforme 10A, 10B, 10C autour de son axe "A" principal.

Dans l'exemple représenté aux figures 1 à 3, la collerette 16 est agencée à la jonction entre la base du col 14 et le corps 12.

En variante non représentée, la collerette peut être agencée ailleurs qu'à la base du col, par exemple au niveau du buvant.

Selon une autre variante non représentée, la collerette est rapportée sur la préforme, par exemple par l'intermédiaire d'un bouchon.

Par la suite on définit un diamètre "D1" de collerette qui correspond au diamètre externe de la collerette 16. On définit aussi un diamètre "D2" de corps qui correspond au diamètre externe maximal du corps 12. Le diamètre "D2" de corps est inférieur au diamètre "D1" de collerette.

Le col 14 présente sa forme définitive, tandis que le corps 12 est destiné à être étiré lors d'une opération ultérieure de formage pour former le corps du récipient fini.

En outre, le poids du corps 12 des préformes 10A, 10B, 10C utilisées est supérieur au poids du col 14, incluant celui de la collerette 16. Le centre "G" de gravité de la préforme 10A, 10B est donc situé sous la collerette 16 en référence aux figures 1 et 2. Ainsi, une préforme 10 soutenue par sa collerette 16 en reposant sur deux supports diamétralement opposés s'orientera naturellement par gravité col 14 en haut.

On a déjà proposé un dispositif d'alignement et de redressement comportant un bol de centrifugeuse. Les préformes sont jetées en vrac sur un plateau tournant formant le fond du bol. Les préformes sont ensuite projetées par la force centrifuge contre une rambarde périphérique. Un interstice périphérique réservé radialement entre un rail fixe et le bord périphérique du plateau tournant permet le passage du corps 12 des préformes tout en les retenant par leur collerette 16. A cet effet, l'interstice radial présente une largeur comprise entre le diamètre "D1" de collerette et le diamètre "D2" de corps. Les préformes sont ainsi alignées à la périphérie du bol, leur axe principal présentant une orientation sensiblement verticale sous l'effet de la gravité.

Les préformes ainsi redressées et alignées sont ensuite acheminées en file vers une sortie tangentielle du bol sous l'effet du mouvement de rotation du plateau tournant.

De manière connue, les préformes 10A, 10B sont reçues dans l'interstice radial avec un débattement radial limité dans un premier sens par contact d'un tronçon du corps 12 située juste au-dessous de la collerette 16 avec un bord du plateau tournant et dans un deuxième sens par contact dudit tronçon avec le rail fixe.

Dans les deux géométries de préformes 10A, 10B représentés aux figures 1 et 2, le corps 12 présente, au niveau de sa jonction avec la collerette 16, son diamètre "D2" de corps. Le corps 12 de la préforme 10A présente une section sensiblement constante, correspondant au diamètre "D2" de corps sur toute sa longueur, tandis que le corps 12 de la préforme 10B présente un diamètre qui diminue à mesure qu'on s'approche de son extrémité inférieure fermée. Ce type de géométrie permet de garantir que la collerette 16 soit toujours supportée avec une portée suffisante simultanément par le plateau et par le rail fixe, évitant ainsi à la préforme de passer totalement sous le plateau à travers l'interstice.

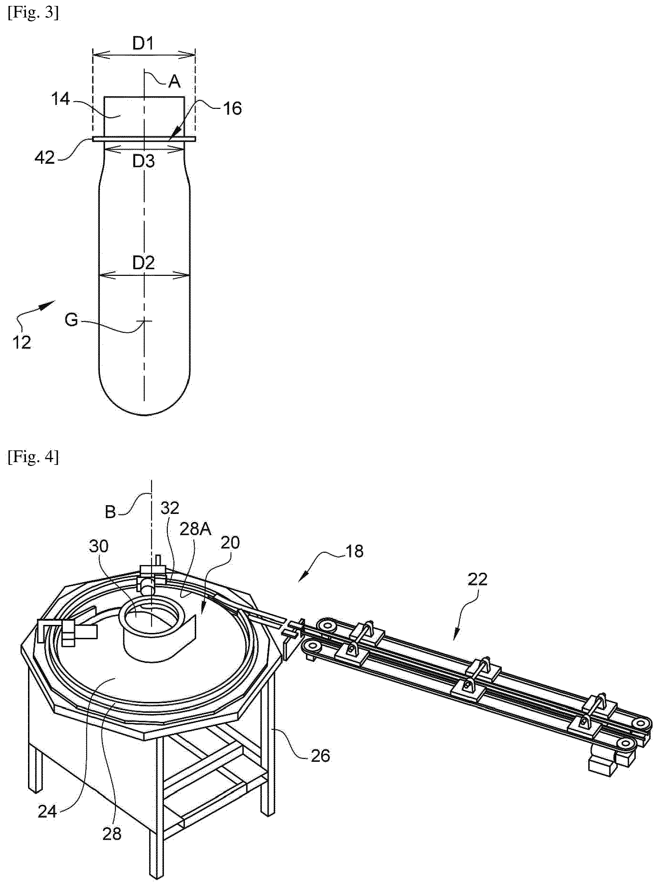

Comme représenté à la figure 3, certaines préformes 10C présentent une géométrie légèrement différente de celle des préformes 10A, 10B illustrées aux figures 1 et 2. Il s'agit par exemple de préformes 10C utilisées pour réaliser des récipients de grand volume, par exemple supérieurs à 1,5 L. La préforme 10C présente les mêmes caractéristiques que les préformes 10A, 10B, décrites précédemment à l'exception de la forme de leur corps 12.

En effet, pour une telle préforme 10C, le diamètre "D3" du corps 12 au niveau de sa jonction avec la collerette 16, dit "diamètre D3 sous col" est inférieur au diamètre "D2" de corps. Une telle géométrie permet notamment une répartition de la matière plus adaptée pour le formage d'un récipient de grand volume. Bien entendu, pour permettre à la collerette 16 de jouer sa fonction de support, le diamètre "D1" de collerette demeure supérieur au diamètre "D2" de corps.

Or, pour permettre le passage du corps 12 à travers l'interstice, il est nécessaire que l'interstice présente une largeur supérieure au diamètre "D2" de corps de la préforme 10C. Cependant, le tronçon de corps 12 situé juste au-dessous de la collerette 16 présente le diamètre "D3" sous col qui est bien inférieur à la largeur de l'interstice. De ce fait, il peut arriver que le débattement radial de la préforme 10C dans l'interstice soit trop important, au point que la collerette 16 ne soit plus supportée avec une portée suffisante par le rail, respectivement par le plateau, lorsque la préforme est en butée contre le plateau, respectivement contre le rail. La préforme 10C risque alors de basculer et de se bloquer, voire de passer totalement à travers l'interstice.

### Résumé de l'invention

L'invention concerne un procédé de guidage d'une préforme axisymétrique redressée dans un dispositif d'alignement et de redressement de préformes,
la préforme comportant :
- une collerette de support délimitée radialement vers l'extérieur par un bord, la collerette présentant un diamètre externe dit "diamètre de collerette" ;
- un corps présentant un diamètre externe maximal, dit "diamètre de corps", qui est inférieur au diamètre de collerette ;
   le dispositif d'alignement et de redressement comportant :
   - un plateau circulaire horizontal tournant autour d'un axe vertical destiné à entraîner les préformes d'amont en aval ;
   - un rail fixe dont une face externe de support supérieure s'étend au même niveau qu'une face interne de support supérieure du plateau tournant, le rail formant un arc de cercle centré sur l'axe de rotation du plateau tournant ;
   - un interstice périphérique délimité radialement entre un bord externe du plateau tournant et le rail, l'interstice présentant une largeur radiale constante comprise entre le diamètre de corps et le diamètre de collerette pour permettre le redressement de la préforme par passage du corps à travers ledit interstice, la collerette étant soutenue de manière conjointe par la face interne de support et par la face externe de support ;
      caractérisé en ce que le guidage de la préforme dans l'interstice consiste à limiter dans les deux sens le déplacement radial de la préforme le long de l'interstice par contact entre le bord périphérique de la collerette avec une face interne d'arrêt, vers l'intérieur, et par contact entre le bord périphérique de la collerette avec la face externe d'arrêt, vers l'extérieur.

L'invention concerne aussi un dispositif d'alignement et de redressement pour la mise en oeuvre du procédé réalisé selon les enseignements de l'invention, le dispositif présentant un bol de centrifugeuse comportant :
- un plateau tournant circulaire horizontal autour d'un axe vertical destiné à entraîner les préformes d'amont en aval ;
- un secteur angulaire du bol dans lequel le bol présente un interstice périphérique délimité entre un rail fixe et un bord externe du plateau tournant, l'interstice étant destiné à permettre le basculement du corps des préformes sous le niveau du plateau tournant, une collerette de la préforme étant destinée à être soutenue de manière conjointe par une face interne de support supérieure du plateau tournant et par une face externe de support supérieure du rail qui s'étendent au même niveau ;
   caractérisé en ce que le plateau tournant comporte une face interne d'arrêt qui s'étend vers le haut depuis la face interne de support et qui est tournée vers l'extérieur, et en ce que le rail présente une face externe d'arrêt qui s'étend vers le haut depuis la face externe de support du rail et qui est agencée en vis-à-vis de la face interne d'arrêt.

Selon d'autres caractéristiques du dispositif réalisé selon les enseignements de l'invention :
- la face interne d'arrêt fait partie d'une face annulaire d'épaulement entre une partie centrale de la face supérieure du plateau tournant et la face interne de support du plateau tournant, la face interne de support étant agencée au-dessous du niveau de la partie centrale ;
- la face annulaire d'épaulement du plateau tournant présente un chanfrein qui relie la face interne d'arrêt avec la partie centrale de la face supérieure du plateau tournant ;
- la deuxième face externe d'arrêt du rail est prolongée vers le haut par un chanfrein ;
- le plateau tournant comporte un guide interne périphérique inférieur qui s'étend au-dessous de la face interne de support et qui est destiné à limiter le soulèvement et/ou le basculement de la collerette des préformes circulant dans l'interstice par rapport à la face interne de support par contact entre le corps de la préforme et le guide interne ;
- le rail fixe comporte un guide externe périphérique inférieur destiné à limiter le soulèvement et/ou le basculement de la collerette des préformes circulant dans l'interstice par rapport à la face externe de support par contact entre le corps de la préforme et le guide externe ;
- la face interne de support et la face d'épaulement sont portés par une pièce démontable de manière à pouvoir adapter le plateau tournant à différentes dimensions de préformes ;
- le rail fixe est monté de manière démontable de manière à pouvoir adapter le plateau tournant à différentes dimensions de préformes.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[fig.1] La figure 1 est une vue de face qui représente une première géométrie de préforme adaptée pour être utilisée avec le dispositif de la figure 4, l'axe de la préforme étant ici orienté verticalement ;
[fig.2] La figure 2 est une vue de face qui représente une deuxième géométrie de préforme adaptée pour être utilisée avec le dispositif de la figure 4, l'axe de la préforme étant ici orienté verticalement ;
[fig.3] La figure 3 est une vue de face qui représente une troisième géométrie de préforme adaptée pour être utilisée avec le dispositif de la figure 4, l'axe de la préforme étant ici orienté verticalement ;
[fig.4] La figure 4 est une vue en perspective qui représente schématiquement un dispositif d'alignement et de redressement de préformes comportant un bol de centrifugeuse ;
[fig.5] La figure 5 est une vue de dessus qui représente le bol de centrifugeuse de la figure 4 ;
[fig.6] La figure 6 est une vue en coupe radiale d'un secteur d'alignement du bol de centrifugeuse de la figure 4 qui représente la rambarde périphérique et le plateau tournant du bol de centrifugeuse ainsi qu'une préforme alignée ;
[fig.7] La figure 7 est une vue en perspective qui représente un déversoir du dispositif de la figure 4 ;
[fig.8] La figure 8 est une vue de dessus qui représente une partie du secteur d'alignement du bol de centrifugeuse, ainsi que les différentes étapes du parcours d'une préforme déversée dans le bol de centrifugeuse ;
[fig.9] La figure 9 est une vue en coupe radiale d'un secteur de redressement du bol de centrifugeuse de la figure 4 qui représente la rambarde périphérique et le plateau tournant du bol de centrifugeuse ainsi qu'une préforme alignée et redressée ;
[fig.10] La figure 10 est une vue schématique selon une direction radiale qui représente une préforme alignée le long de la rambarde dans le secteur d'alignement du bol de centrifugeuse de la figure 4 ;
[fig.11] La figure 11 est une vue de dessus de la figure 10 ;
[fig.12] La figure 12 est une vue similaire à celle de la figure 10 qui représente la préforme de la figure 10 en cours de redressement au début du secteur de redressement du bol de centrifugeuse de la figure 4 ;
[fig.13] La figure 13 est une vue de dessus de la figure 12 ;
[fig.14] La figure 14 est une vue similaire à celle de la figure 12 qui représente la préforme de la figure 12 redressée dans le secteur de redressement du bol de centrifugeuse de la figure 4 ;
[fig.15] La figure 15 est une vue de dessus de la figure 14 ;
[fig.16] La figure 16 est une vue similaire à celle de la figure 9 qui représente la collerette de la préforme en butée contre une face externe d'arrêt du rail.

### Description détaillée de l'invention

Dans la suite de la description, des éléments présentant une structure identique ou des fonctions analogues seront désignés par des mêmes références.

Dans la suite de la description, on adoptera à titre non limitatif les orientations locales suivantes pour chaque préforme présente dans le bol de centrifugeuse du dispositif d'alignement et de redressement :
- radiale "R" dirigée de l'intérieur vers l'extérieur depuis l'axe "B" de rotation du plateau 24 tournant ;
- tangentiel "T" qui est orthogonale à la direction radiale "R" et qui s'étend parallèlement au plan du plateau 24 tournant, dirigée d'amont en aval selon le sens de rotation du plateau 24 tournant ;
- verticale "V" dirigée parallèlement à l'axe "B" de rotation du plateau 24 tournant, de bas en haut selon le sens inverse de la gravité terrestre.

On a représenté à la figure 4 un dispositif 18 d'alignement en une file et de redressement de préformes 10A, 10B, 10C, telles que décrites précédemment, destiné à faire partie d'une installation (non représentée) de fabrication de récipient en matériau thermoplastique par formage, notamment par soufflage ou par étirage-soufflage, des préformes 10A, 10B, 10C. Le dispositif 18 d'alignement et de redressement étant adapté pour toutes les préformes 10A, 10B, 10C représentées aux figures 1 à 3, on utilisera la référence générique "préforme 10" pour désigner l'une quelconque des préformes 10A, 10B, 10C afin de simplifier la lecture des dessins.

Il s'agit ici d'un dispositif 18 d'alignement et de redressement tel que décrit dans les documents WO 2016/166459 A1 ou encore US 2018/0086570 A1.

Comme cela sera expliqué par la suite, le dispositif 18 d'alignement et de redressement est susceptible de traiter des lots de préformes 10 identiques, le format des préformes 10 étant susceptible de varier selon le lot. De ce fait, différents réglages sont susceptibles d'être effectués sur le dispositif 18 d'alignement et de redressement lors d'un changement de format de préforme 10.

En revenant à la figure 4, le dispositif 18 d'alignement et de redressement comporte principalement un bol 20 de centrifugeuse ainsi qu'un convoyeur 22 de sortie de la file des préformes 10 redressées. Le convoyeur 22 de sortie est destiné à acheminer les préformes 10 redressées pour les distribuer une par une à des moyens de prise en charge individuel de chaque préforme 10 d'une station (non représentée) de traitement suivante de l'installation de fabrication, par exemple un four de chauffage des préformes 10.

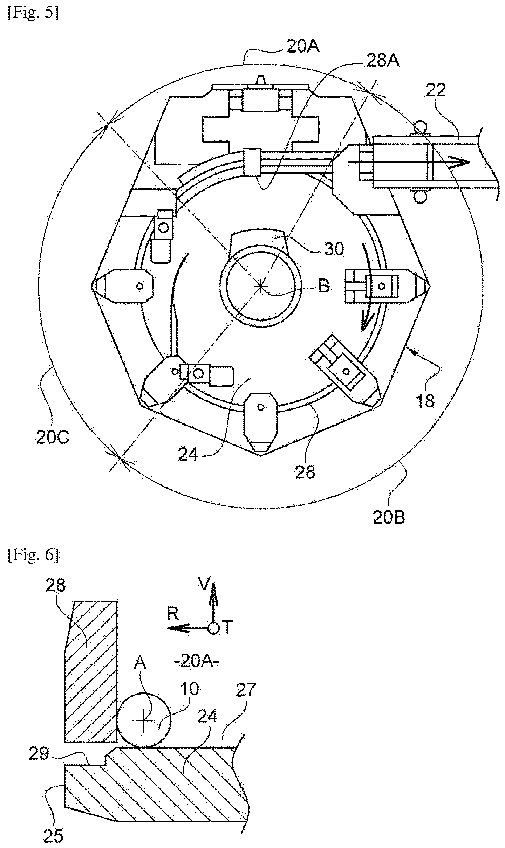

Le bol 20 de centrifugeuse comporte un plateau 24 circulaire horizontal tournant autour d'un axe "B" vertical central. Le plateau 24 tournant présente ainsi un bord 25 externe circulaire représenté à la figure 6. Une face 27 supérieure du plateau 24 tournant délimite verticalement vers le bas le volume intérieur du bol 20 de centrifugeuse. Ainsi, le plateau 24 tournant forme le fond du bol 20. La face 27 supérieure du plateau 24 tournant présente une bande annulaire périphérique qui est destinée à former une face 29 interne de support pour la collerette 16 d'une préforme 10, comme cela sera expliqué par la suite.

Le plateau 24 tournant présente un diamètre externe très supérieur aux dimensions des préformes 10.

Le plateau 24 tournant peut être entraîné en rotation à un régime constant, ici dans un sens horaire en vue de dessus, par exemple par un moteur (non représenté) qui est agencé sous le plateau 24 tournant. La vitesse de rotation est par exemple commandée de manière que le bord 25 externe du plateau 24 tournant se déplace entre 2 et 3 m/s.

Le plateau 24 tournant est ici porté par une table 26 de support qui est fixée au sol. La table 26 de support présente des pieds qui sont avantageusement réglables en hauteur pour permettre de régler l'assiette du plateau 24 tournant.

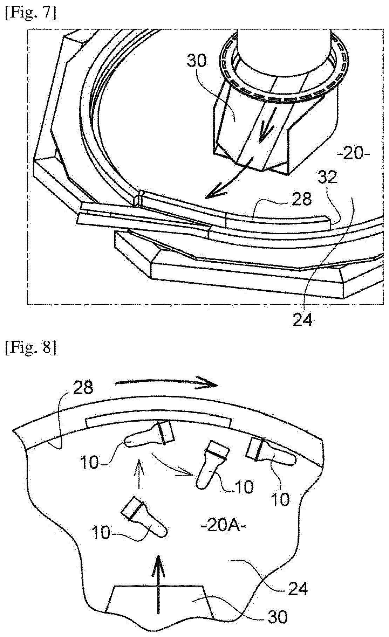

Le volume intérieur du bol 20 de centrifugeuse est délimité radialement vers l'extérieur par une rambarde 28 périphérique fixe qui est ici fixée à la table 26 de support. Cette rambarde 28 a notamment pour première fonction de retenir les préformes 10 projetées vers l'extérieur par la force centrifuge produite par la rotation du plateau 24 tournant, et pour deuxième fonction de guider le déplacement des préformes 10 jusqu'à un passage 32 de sortie du bol 20 qui est ménagé dans la rambarde 28, comme cela est visible notamment à la figure 7.

Les préformes 10 sont destinées à être déversées en vrac sur le plateau 24 tournant par l'intermédiaire d'un déversoir 30 fixe. Le déversoir 30 est ici agencé au centre du plateau 24 tournant. Le déversoir 30 est conçu pour déverser les préformes 10 en vrac, radialement en direction d'une portion 28A de réception de la rambarde 28. Le déversoir 30 se présente ici sous la forme d'un toboggan alimenté en préformes 10 par le haut par l'intermédiaire d'un tapis élévateur (non représenté).

Comme cela est illustré à la figure 5, pour les besoins de la description, on divisera le bol 20 en trois secteurs angulaires fixes par rapport à la table 26 de support.

Un premier secteur 20A angulaire d'alignement des préformes 10 s'étend face à la sortie du déversoir 30. Ce secteur 20A angulaire d'alignement inclut la portion 28A de réception de la rambarde 28.

Un deuxième secteur 20B angulaire de redressement des préformes 10 alignées est agencé directement en aval du premier secteur 20A angulaire d'alignement. De manière non limitative, il s'étend ici globalement sur 180°.

Un troisième secteur 20C angulaire de sortie des préformes 10 correctement positionnées est agencé directement en aval du deuxième secteur 20B angulaire de redressement et directement en amont du premier secteur 20A angulaire d'alignement. A l'extrémité aval de ce secteur 20C de sortie, le passage 32 de sortie des préformes 10 est ouvert dans la rambarde 28 pour permettre de guider les préformes 10 correctement positionnées vers le convoyeur 22.

La dénomination de chacun de ces secteurs 20A, 20B, 20C fournit une indication sur leur fonction.

Sur toute la périphérie du premier secteur 20A angulaire d'alignement, un jeu de fonctionnement est réservé entre la rambarde 28 et le plateau 24 tournant. Ce jeu permet la rotation du plateau 24 tournant, mais il est toutefois suffisamment faible pour permettre à la rambarde 28 de retenir la totalité de la préforme 10 à l'intérieur du bol 20.

Comme représenté à la figure 6, sur ce secteur 20A d'alignement, la rambarde 28 s'étend ici verticalement au-dessus du plateau 24 tournant, de manière que le bord 25 externe du plateau 24 tournant est agencé à l'extérieur du bol 20 de centrifugeuse.

En cours de fonctionnement du dispositif 18 d'alignement et de redressement, comme représenté aux figures 7 et 8, lors d'une première étape de déversement, les préformes 10 déversées en vrac par le déversoir 30 sont projetées radialement contre la rambarde 28 sous l'effet conjugué de leur vitesse radiale de glissement en sortie du déversoir 30 et de la force centrifuge produite par la rotation du plateau 24 tournant. Dans le même temps, le plateau 24 tournant commence aussi à entraîner dans sa rotation les préformes 10 tangentiellement vers l'aval.

Lors d'une deuxième étape d'alignement, les préformes 10 sont maintenues à l'intérieur du bol 20 par la rambarde 28, puis, après un ou plusieurs rebonds contre la rambarde 28, les préformes 10 perdent progressivement de la vitesse selon la direction radiale. Elles sont alors constamment maintenues radialement contre la rambarde par la force centrifuge. On a représenté le trajet suivi par une même préforme 10 à la figure 8 depuis son arrivée via le déversoir 30 jusqu'à sa position stable contre la rambarde 28. Les préformes 10 sont alors entraînées en déplacement purement tangentiel dans un sens horaire par le plateau 24 tournant le long de la rambarde 28.

Dans cette configuration, les préformes 10 occupent naturellement la position la plus stable dans laquelle leur axe "A" principal est orienté selon une direction tangente par rapport au plateau 24 tournant.

La plupart des préformes 10 présentes dans le secteur 20A angulaire d'alignement du bol 20 sont ainsi alignées tangentiellement contre la rambarde 28, leur axe "A" principal étant orienté sensiblement tangentiellement à leur direction de déplacement. L'écart tangentiel entre deux préformes 10 alignées successives est aléatoire car le plateau 24 tournant est parfaitement plan et ne présente pas de crans d'indexation des préformes 10. Les préformes 10 peuvent ainsi être en contact par leurs extrémités sous l'effet de la force centrifuge qui oblige les préformes 10 à glisser les unes par rapport aux autres. Les préformes 10 occupent ainsi de manière optimal toute la longueur périphérique du bol 20.

Le fait que les préformes 10 soient maintenues sur le plateau 24 tournant permet de les maintenir plaquées radialement contre la rambarde 28. Ainsi, les préformes 10 sont guidées de manière stable par la rambarde 28 durant leur déplacement autour du bol 20.

A ce stade, les préformes 10 sont orientées aléatoirement col 14 vers l'amont ou vers l'aval sans incidence pour la suite du procédé. Les préformes 10 ainsi alignées poursuivent leur déplacement périphérique dans le secteur 20B de redressement.

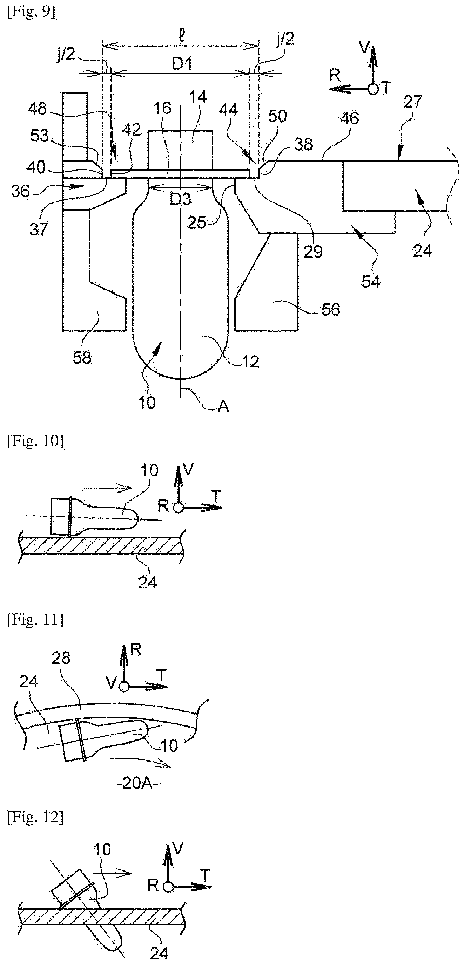

Comme représenté à la figure 9, sur le deuxième secteur 20B angulaire de redressement du bol 20 de centrifugeuse, le bol 20 présente un interstice 34 périphérique formé par écartement radial de la rambarde 28 par rapport au bord 25 externe du plateau 24 tournant. La largeur radiale de l'interstice 34 est comprise entre le diamètre "D2" de corps et le diamètre "D1" de collerette. Cet interstice 34 se prolonge jusqu'au passage 32 de sortie des préformes 10.

Au moins tout le long du deuxième secteur 20B de redressement, la rambarde 28 comporte un rail 36 de support de la collerette 16. Le rail 36 s'étend en saillie radialement vers l'intérieur. La face supérieure du rail 36 forme une face 37 externe support de la collerette 16 d'une préforme 10 comme cela sera expliqué par la suite. La face 37 externe de support du rail 36 s'étend au même niveau que la face 29 interne de support du plateau 24 tournant.

L'interstice 34 est ainsi délimité vers l'intérieur par le bord 25 externe de la face 29 interne de support du plateau 24 tournant et vers l'extérieur par le bord interne de la face 37 externe de support du rail 36. Le rail 36 forme un arc de cercle centré sur l'axe "B" de rotation du plateau 24 tournant. Le rail 36 se prolonge ici jusqu'au passage 32 de sortie.

Ainsi, les préformes 10 sont susceptibles d'être soutenues par leur collerette 16 qui repose en deux points diamétralement opposée sur la face 29 interne de support du plateau 24 tournant, d'une part, et sur la face 37 externe de support du rail 36, d'autre part, le corps 12 des préformes 10 étant sous le niveau du plateau 24 tournant à travers ledit interstice 34. Les deux points d'appui sont alignés radialement. Le rail 36 permet de soutenir les préformes 10 de manière stable.

Ainsi, lors d'une troisième étape de redressement, comme représenté aux figures 10 et 11, les préformes 10 alignées lors de la deuxième étape arrivent depuis le premier secteur 20A d'alignement en étant alignées en position allongée en une file le long de la rambarde 28, leur axe "A" principal orienté tangentiellement. Les préformes 10 alignées sont disposées aléatoirement col 14 en amont ou col 14 en aval sans que cela n'ait d'influence sur leur redressement.

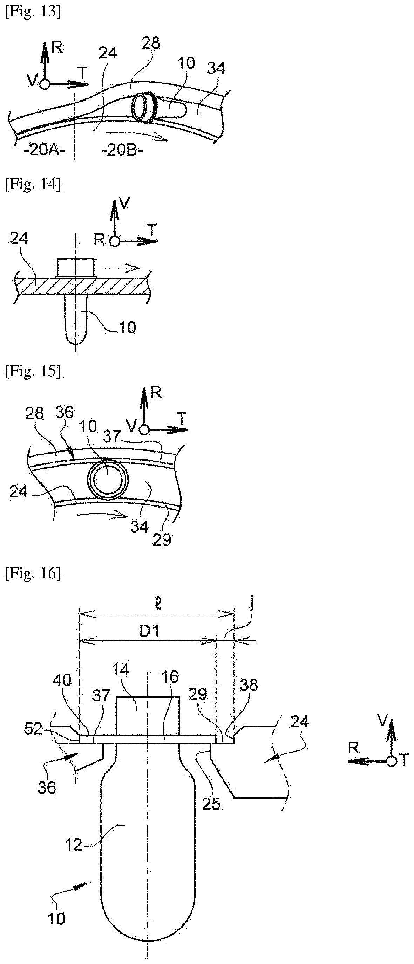

Lorsque le corps 12 de chaque préforme 10 arrive au-dessus de l'interstice 34, le corps 12 commence à tomber, comme représenté aux figures 12 et 13, faisant ainsi basculer la préforme 10 autour d'un axe radial passant par les points d'appui de la collerette 16 de la préforme 10. Le basculement se poursuit jusqu'à ce que l'axe "A" principal de la préforme 10 soit vertical, éventuellement après quelques balancement autour de l'axe radial. La préforme 10 est alors soutenues par sa collerette 16 conjointement par la face 37 externe de support du rail 36 et par la face 29 interne de support du plateau 24 tournant, comme indiqué aux figures 14 et 15. La préforme 10 est ainsi redressée, col 14 en haut. La préforme 10 ainsi correctement positionnée est guidée le long de l'interstice 34 en direction du passage 32 de sortie par des moyens qui seront décrits plus en détails par la suite.

Lors du basculement, l'axe "A" principal de la préforme 10 demeure dans un plan vertical tangent au déplacement. Du fait du basculement de l'axe "A" principal dans le sens de déplacement des préformes 10, la collerette 16 de chaque préforme 10 demeure en permanence en contact avec le plateau 24 tournant d'une part, et le rail 36 d'autre part, par ses deux points d'appui. Ainsi, chaque préforme 10 est supportée de manière stable et efficace durant son redressement.

Comme représenté à la figure 13, une zone de transition est prévue à l'extrémité amont du secteur 20B angulaire de redressement. Dans cette zone de transition, l'interstice 34 est élargi progressivement jusqu'à atteindre sa largeur finale. Pour ce faire, le rail 36 de la rambarde 28 s'éloigne radialement progressivement de l'axe "B" de rotation du plateau 24 tournant. Ceci permet aux préformes 10 alignées de rester constamment en contact avec la rambarde 28 sous l'effet de la force centrifuge. Les préformes 10 sont ainsi guidées de manière stables en position alignée même pendant leur redressement. La largeur de l'interstice 34 demeure ensuite constante, comprise entre le diamètre "D2" de corps et le diamètre "D1" de collerette, jusqu'au passage 32 de sortie du dispositif 18 d'alignement et de redressement.

Les préformes 10 ainsi alignées et redressées sont entraînées en rotation autour de leur axe "A" principal par frottement contre le bord 25 externe du plateau 24 tournant. Les préformes 10 redressées sont déplacées à la périphérie du bol 20 dans le sens de rotation du plateau 24 tournant par roulement contre le rail 36.

Les préformes 10 redressées sont ainsi acheminées vers le troisième secteur 20C de sortie. Le troisième secteur 20C de sortie comporte des moyens pour garantir que seules les préformes 10 correctement alignées et redressées atteignent le passage 32 de sortie. Ces moyens ne font pas l'objet de l'invention et ne seront pas décrits plus en détails par la suite. Pour plus de détails, on pourra se reporter aux documents cités précédemment.

De manière connue, la préforme 10 est guidée dans l'interstice 34 en limitant le déplacement de la préforme 10 le long de l'interstice 34 radialement :
- vers l'intérieur par contact entre la préforme 10 et une face 38 interne d'arrêt du plateau 24 tournant, et
- vers l'extérieur, et par contact entre la préforme 10 et une face 40 externe d'arrêt du rail.

Il est cependant essentiel que, même lorsque la préforme 10 est en contact avec une face 38, 40 d'arrêt d'une des faces 29, 37 interne ou externe de support située d'un premier côté de l'interstice 34, la collerette 16 soit toujours supportée avec une portée suffisante sur la face 37, 29 externe ou interne de support située du côté opposé de l'interstice 34.

Pour permettre de guider tout type de préformes 10, et notamment les préformes 10C du type illustré à la figure 3, l'invention propose de limiter le déplacement de la préforme 10 dans l'interstice 34 radialement :
- vers l'intérieur par contact entre le bord 42 périphérique externe de la collerette 16 avec la face 38 interne d'arrêt, et
- vers l'extérieur, et par contact entre le bord 42 périphérique de la collerette 16 avec la face 40 externe d'arrêt.

Ainsi, le débattement radial de la préforme 10 devient indépendant du diamètre "D3" sous col du corps 12. Le débattement radial est uniquement déterminé par le diamètre "D 1" de collerette.

Comme représenté en détails à la figure 9, pour limiter le déplacement d'une préforme 10 redressée dans l'interstice 34 radialement vers l'intérieur, le plateau 24 tournant comporte ainsi la face 38 interne d'arrêt qui s'étend vers le haut depuis la face 29 interne de support. La face 38 interne d'arrêt est tournée radialement vers l'extérieur. Elle présente une forme annulaire centrée sur l'axe "B" de rotation du plateau 24 tournant. La face 29 interne de support est ainsi délimitée radialement par le bord 25 externe du plateau 24 tournant et par la face 38 interne d'arrêt.

La face 38 interne d'arrêt fait partie d'une face 44 annulaire d'épaulement entre une partie 46 circulaire centrale de la face supérieure du plateau 24 tournant et la face 29 interne de support. La face 29 interne de support et la partie 46 centrale sont étagées de manière que la face 29 interne de support soit ainsi agencée au-dessous du niveau de la partie 46 centrale. La différence de niveau est de l'ordre de quelques millimètres. La face 38 interne d'arrêt présente par exemple une hauteur globalement égale à l'épaisseur de la collerette 16 d'une préforme 10.

Pour limiter le déplacement d'une préforme 10 redressée dans l'interstice 34 radialement vers l'extérieur, le rail 36 comporte la face 40 externe d'arrêt qui s'étend orthogonalement vers le haut depuis la face 37 externe de support du rail. La face 40 externe d'arrêt est agencée radialement en vis-à-vis de la face 38 interne d'arrêt. La face 37 externe de support est ainsi délimitée radialement par un bord interne libre du rail 36 et par la face 40 externe d'arrêt.

Les deux faces 38, 40 d'arrêt délimitent radialement une piste 48 de guidage pour la collerette 16 qui s'étend le long de l'interstice 34. On définit une largeur "l" de la piste 48 de guidage qui correspond à la distance radiale entre la face 38 interne d'arrêt et la face 40 externe d'arrêt. La largeur "l" de la piste 48 de guidage demeure constante tout le long de l'interstice 34, à l'exception de la zone de transition. La largeur "l" est égale à la somme du diamètre "D1" de collerette et d'un jeu "j" radial qui garantit une portée suffisante de la collerette 16 sur les faces 29, 37 interne et externe de support quelle que soit la position radiale de la préforme 10 redressée entre les deux faces 38, 40 d'arrêt.

La largeur radial de la face 29 interne de support du plateau 24 tournant est supérieure au jeu "j" pour garantir une portée suffisante de la collerette 16 même lorsque le bord 42 de la collerette 16 est en butée contre la face 40 externe d'arrêt, comme cela est illustré à la figure 16. La largeur radial de la face 29 interne de support est également inférieure à la différence entre le diamètre "D 1" de collerette et le diamètre "D3" sous col, notamment lorsque la préforme 10 présente une géométrie similaire à celle de la préforme 10C de la figure 3.

De même, la largeur radial de la face 37 externe de support du rail 36 est supérieure au jeu "j" pour garantir une portée suffisante de la collerette 16 même lorsque le bord 42 de la collerette 16 est en butée contre la face 38 interne d'arrêt. La largeur radial de la face 37 externe de support est également inférieure à la différence entre le diamètre "D1" de collerette et le diamètre "D3" sous col, notamment lorsque la préforme 10 présente une géométrie similaire à celle de la préforme 10C de la figure 3.

Dans les exemples représentés aux figures 9 et 16, la face 29 interne de support du plateau 24 tournant et la face 37 externe de support du rail 36 présentent une largeur identique.

Pour garantir que la collerette 16 d'une préforme 10 soit supportée bien à plat par les faces 29, 37 interne et externe de supports et qu'elle soit correctement reçue dans la piste 48 de guidage, la face 44 annulaire d'épaulement du plateau 24 tournant présente un chanfrein 50 qui relie la face 38 interne d'arrêt avec la partie 46 centrale du plateau 24 tournant et/ou la deuxième face 40 externe d'arrêt du rail est prolongée vers le haut par un chanfrein 53. Cela permet à la collerette 16 de prendre sa place entre les deux faces d'arrêt par glissement sur les chanfreins 50, 53, formant un entonnoir convergent, sous l'effet de la gravité lors du redressement de la préforme 10.

Pour permettre d'adapter le dispositif 18 d'alignement et de redressement à des lots de préformes 10 de différents modèles, notamment des préformes 10 présentant des collerettes 16 de dimensions variées, il est avantageux de pouvoir changer la largeur "l" de la piste 48 de guidage. A cet effet, au moins l'un parmi le rail 36 ou une portion 54 périphérique du plateau 24 tournant est démontable.

Par exemple, une portion 54 périphérique du plateau 24 tournant comportant la face 29 interne de support et la face 44 d'épaulement est formée d'une pièce rapportée démontable de manière à pouvoir adapter le plateau 24 tournant à différentes dimensions de préformes 10. La portion 54 périphérique démontable est par exemple constituée de plusieurs segments distincts qui, lorsqu'ils sont assemblés avec le plateau 24 tournant, en font le tour complet.

Selon un autre exemple qui peut être combiné avec l'exemple du paragraphe précédent, le rail 36 fixe est monté de manière démontable, en une ou plusieurs pièces, sous la rambarde 28 de manière à pouvoir adapter le plateau 24 tournant à différentes dimensions de préformes 10.

Pour limiter le basculement latéral des préformes 10 redressées qui sont engagées dans l'interstice 34, et limiter ainsi le soulèvement de la collerette 16 d'un côté de l'interstice 34 en prenant appui sur l'autre côté, risquant ainsi de la faire sortir accidentellement de sa piste 48 de guidage, il est possible de prévoir que le plateau 24 tournant comporte un guide 56 interne périphérique inférieur qui s'étend au-dessous de la face 29 interne de support. Le soulèvement est plus particulièrement limité de manière que la collerette 16 ne puisse pas être soulevée de la face 29 interne de support d'une distance supérieure à la hauteur de la face 38 interne d'arrêt correspondante par basculement. Le guide 56 interne est destiné à limiter le soulèvement de la collerette 16 de la face 29 interne de support par contact entre le corps 12 de la préforme 10 et le guide 56 interne.

Pour la même raison, il est aussi possible de prévoir que le rail 36 fixe comporte un guide 58 externe périphérique inférieur qui s'étend au-dessous de la face 37 externe de support du rail 36. Le guide 58 externe est destiné à limiter le soulèvement de la collerette 16 de la face 37 externe de support du rail 36 par contact entre le corps 12 de la préforme 10 et le guide 58 externe. Le soulèvement est plus particulièrement limité de manière que la collerette 16 ne puisse pas être soulevée de la face 37 externe de support d'une distance supérieure à la hauteur de la face 40 externe d'arrêt correspondante par basculement.

Un dispositif 18 d'alignement et de redressement comportant un interstice 34 équipé d'une piste de guidage de la collerette 16 selon les enseignements de l'invention permet avantageusement de garantir un bon support des préformes 10 redressées dans l'interstice 34 indépendamment de son diamètre "D3" sous col.

## Revendications

1. Procédé de guidage d'une préforme (10) axisymétrique redressée dans un dispositif (18) d'alignement et de redressement de préformes,
la préforme (10) comportant :
- une collerette (16) de support délimitée radialement vers l'extérieur par un bord (42), la collerette (16) présentant un diamètre externe dit "diamètre (D1) de collerette" ;
- un corps (12) présentant un diamètre externe maximal, dit "diamètre (D2) de corps", qui est inférieur au diamètre (D1) de collerette ;
le dispositif (18) d'alignement et de redressement comportant :
- un plateau (24) circulaire horizontal tournant autour d'un axe vertical destiné à entraîner les préformes (10) d'amont en aval ;
- un rail (36) fixe dont une face (37) externe de support supérieure s'étend au même niveau qu'une face (29) interne de support supérieure du plateau (24) tournant, le rail (36) formant un arc de cercle centré sur l'axe (B) de rotation du plateau (24) tournant ;
- un interstice (34) périphérique délimité radialement entre un bord (25) externe du plateau (24) tournant et le rail (36), l'interstice (34) présentant une largeur radiale constante comprise entre le diamètre (D2) de corps et le diamètre (D1) de collerette pour permettre le redressement de la préforme (10) par passage du corps (12) à travers ledit interstice (34), la collerette (16) étant soutenue de manière conjointe par la face (29) interne de support et par la face (37) externe de support ;
**caractérisé en ce que** le guidage de la préforme (10) dans l'interstice (34) consiste à limiter dans les deux sens le déplacement radial de la préforme (10) le long de l'interstice (34) par contact entre le bord (42) périphérique de la collerette (16) avec une face (38) interne d'arrêt, vers l'intérieur, et par contact entre le bord (42) périphérique de la collerette (16) avec la face (40) externe d'arrêt, vers l'extérieur.

2. Dispositif (18) d'alignement et de redressement de préformes (10), pour la mise en oeuvre du procédé selon la revendication précédente, le dispositif (18) présentant un bol (20) de centrifugeuse comportant :
- un plateau (24) tournant circulaire horizontal autour d'un axe (B) vertical destiné à entraîner les préformes (10) d'amont en aval ;
- un secteur (20B) angulaire du bol dans lequel le bol (20) présente un interstice (34) périphérique délimité entre un rail (36) fixe et un bord (25) externe du plateau (24) tournant, l'interstice (34) étant destiné à permettre le basculement du corps (12) des préformes (10) sous le niveau du plateau (24) tournant, une collerette (16) de la préforme (10) étant destinée à être soutenue de manière conjointe par une face (29) interne de support supérieure du plateau (24) tournant et par une face (37) externe de support supérieure du rail (36) qui s'étendent au même niveau ;
**caractérisé en ce que** le plateau (24) tournant comporte une face (38) interne d'arrêt qui s'étend vers le haut depuis la face (29) interne de support et qui est tournée vers l'extérieur, et **en ce que** le rail (36) présente une face (40) externe d'arrêt qui s'étend vers le haut depuis la face (37) externe de support du rail (36) et qui est agencée en vis-à-vis de la face (38) interne d'arrêt.

3. Dispositif (18) selon la revendication précédente, **caractérisé en ce que** la face (38) interne d'arrêt fait partie d'une face (44) annulaire d'épaulement entre une partie (46) centrale de la face (27) supérieure du plateau tournant et la face (29) interne de support du plateau (24) tournant, la face (29) interne de support étant agencée au-dessous du niveau de la partie (46) centrale.

4. Dispositif (18) selon la revendication précédente, **caractérisé en ce que** la face (44) annulaire d'épaulement du plateau tournant présente un chanfrein (50) qui relie la face (38) interne d'arrêt avec la partie (46) centrale de la face (27) supérieure du plateau (24) tournant.

5. Dispositif (18) selon l'une quelconque des revendications 2 à 4, **caractérisé en ce que** la deuxième face (40) externe d'arrêt du rail (36) est prolongée vers le haut par un chanfrein (53).

6. Dispositif (18) selon l'une quelconque des revendications 2 à 5, **caractérisé en ce que** le plateau (24) tournant comporte un guide (56) interne périphérique inférieur qui s'étend au-dessous de la face (29) interne de support et qui est destiné à limiter le soulèvement et/ou le basculement de la collerette (16) des préformes (10) circulant dans l'interstice (34) par rapport à la face (29) interne de support par contact entre le corps (12) de la préforme (10) et le guide (56) interne.

7. Dispositif (18) selon l'une quelconque des revendications 2 à 6, **caractérisé en ce que** le rail (36) fixe comporte un guide (58) externe périphérique inférieur destiné à limiter le soulèvement et/ou le basculement de la collerette (16) des préformes (10) circulant dans l'interstice (34) par rapport à la face (37) externe de support par contact entre le corps (12) de la préforme (10) et le guide (58) externe.

8. Dispositif (18) selon l'une quelconque des revendications 2 à 7, **caractérisé en ce que** la face (29) interne de support et la face (44) d'épaulement sont portés par une pièce (54) démontable de manière à pouvoir adapter le plateau (24) tournant à différentes dimensions de préformes.

9. Dispositif (18) selon l'une quelconque des revendications 2 à 8, **caractérisé en ce que** le rail (36) fixe est monté de manière démontable de manière à pouvoir adapter le plateau (24) tournant à différentes dimensions de préformes.

## Patentansprüche

1. Verfahren zum Führen eines achsensymmetrischen aufrechten Vorformlings (10) in einer Vorrichtung (18) zum Ausrichten und Aufrichten von Vorformlingen,
wobei der Vorformling (10) Folgendes aufweist:
- einen Stützkragen (16), der radial nach außen durch einen Rand (42) begrenzt ist, wobei der Kragen (16) einen Außendurchmesser aufweist, der als "Kragendurchmesser (D1)" bezeichnet wird;
- einen Körper (12) mit einem maximalen Außendurchmesser, der als "Körperdurchmesser (D2)" bezeichnet wird und kleiner als der Kragendurchmesser (D1) ist;
wobei die Ausrichtungs- und Aufrichtungsvorrichtung (18) Folgendes aufweist:
- einen horizontalen kreisförmigen Teller (24), der sich um eine vertikale Achse dreht und dazu bestimmt ist, die Vorformlinge (10) von stromaufwärts nach stromabwärts zu befördern;
- eine feste Schiene (36) mit einer äußeren oberen Stützfläche (37), die sich auf derselben Höhe wie eine innere obere Stützfläche (29) des Drehtellers (24) erstreckt, wobei die Schiene (36) einen Kreisbogen bildet, der auf der Drehachse (B) des Drehtellers (24) zentriert ist;
- einen peripheren Spalt (34), der radial zwischen einem äußeren Rand (25) des Drehtellers (24) und der Schiene (36) angeordnet ist, wobei der Spalt (34) eine konstante radiale Breite aufweist, die zwischen dem Körperdurchmesser (D2) und dem Kragendurchmesser (D1) liegt, um das Aufrichten des Vorformlings (10) zu ermöglichen, indem der Körper (12) den Spalt (34) passiert, wobei der Kragen (16) durch die innere Stützfläche (29) und durch die äußere Stützfläche (37) gemeinsam gehalten wird;
**dadurch gekennzeichnet, dass** die Führung des Vorformlings (10) im Spalt (34) darin besteht, in beiden Richtungen die radiale Bewegung des Vorformlings (10) entlang des Spalts (34) durch Kontakt zwischen dem peripheren Rand (42) des Kragens (16) und einer inneren Anschlagsfläche (38) nach innen und durch Kontakt zwischen dem peripheren Rand (42) des Kragens (16) und der äußeren Anschlagseite (40) nach außen zu begrenzen.

2. Vorrichtung (18) zum Ausrichten und Aufrichten von Vorformlingen (10) zur Durchführung des Verfahrens nach dem vorangehenden Anspruch, wobei die Vorrichtung (18) eine Zentrifugenschüssel (20) aufweist, die Folgendes umfasst:
- einen horizontalen kreisförmigen Teller (24), der sich um eine vertikale Achse (B) dreht und dazu bestimmt ist, die Vorformlinge (10) von stromaufwärts nach stromabwärts zu befördern;
- einen Winkelsektor (20B) der Schüssel, in dem die Schüssel (20) einen peripheren Spalt (34) aufweist, der zwischen einer festen Schiene (36) und einem äußeren Rand (25) des Drehtellers (24) begrenzt ist, wobei der Spalt (34) dazu vorgesehen ist, das Kippen des Körpers (12) des Vorformlings (10) unter dem Niveau des Drehtellers (24) zu ermöglichen, wobei ein Kragen (16) des Vorformlings (10) dazu bestimmt ist, durch eine innere obere Fläche (29) des Drehtellers (24) und durch eine äußere obere Fläche (37) der Schiene (36), die sich auf demselben Niveau erstrecken, gemeinsam gehalten zu werden;
**dadurch gekennzeichnet, dass** der Drehteller (24) eine innere Anschlagfläche (38) aufweist, die sich von der inneren Stützfläche (29) nach oben erstreckt und die nach außen gerichtet ist, und dass die Schiene (36) eine äußere Anschlagfläche (40) aufweist, die sich von der äußeren Stützfläche (37) der Schiene (36) nach oben erstreckt und die gegenüber der inneren Anschlagfläche (38) angeordnet ist.

3. Vorrichtung (18) nach dem vorangehenden Anspruch, **dadurch gekennzeichnet, dass** die innere Anschlagfläche (38) Teil einer ringförmigen Schulterfläche (44) zwischen einem mittleren Teil (46) der oberen Fläche (27) des Drehtellers und der inneren Stützfläche (29) des Drehtellers (24) ist, wobei die innere Stützfläche (29) unterhalb des Niveaus des mittleren Teils (46) angeordnet ist.

4. Vorrichtung (18) nach dem vorangehenden Anspruch, **dadurch gekennzeichnet, dass** die ringförmige Schulterfläche (44) des Drehtellers eine Abschrägung (50) aufweist, die die innere Anschlagfläche (38) mit dem mittleren Teil (46) der oberen Fläche (27) des Drehtellers (24) verbindet.

5. Vorrichtung (18) nach einem der Ansprüche 2 bis 4, **dadurch gekennzeichnet, dass** die zweite äußere Anschlagfläche (40) der Schiene (36) nach oben hin durch eine Abschrägung (53) verlängert ist.

6. Vorrichtung (18) nach einem der Ansprüche 2 bis 5, **dadurch gekennzeichnet, dass** der Drehteller (24) eine innere untere periphere Führung (56) aufweist, die sich unterhalb der inneren Stützfläche (29) erstreckt und dazu bestimmt ist, das Anheben und/oder das Kippen des Kragens (16) der sich im Spalt (34) bewegenden Vorformlinge (10) in Bezug auf die innere Stützfläche (29) durch Kontakt zwischen dem Körper (12) des Vorformlings (10) und der inneren Führung (56) zu begrenzen.

7. Vorrichtung (18) nach einem der Ansprüche 2 bis 6, **dadurch gekennzeichnet, dass** die feste Schiene (36) eine äußere untere periphere Führung (58) aufweist, die dazu bestimmt ist, das Anheben und/oder Kippen des Kragens (16) der sich im Spalt (34) bewegenden Vorformlinge (10) in Bezug auf die äußere Stützfläche (37) durch Kontakt zwischen dem Körper (12) des Vorformlings (10) und der äußeren Führung (58) zu begrenzen.

8. Vorrichtung (18) nach einem der Ansprüche 2 bis 7, **dadurch gekennzeichnet, dass** die innere Stützfläche (29) und die Schulterfläche (44) durch ein demontierbares Bauteil (54) getragen werden, so dass der Drehteller (24) an verschiedene Abmessungen von Vorformlingen angepasst werden kann.

9. Vorrichtung (18) nach einem der Ansprüche 2 bis 8, **dadurch gekennzeichnet, dass** die feste Schiene (36) demontierbar montiert ist, so dass der Drehteller (24) an verschiedene Abmessungen von Vorformlingen angepasst werden kann.

## Claims

1. Method for guiding an axisymmetric preform (10) straightened in a device (18) for aligning and straightening of preforms, the preform (10) comprising:
- a support flange (16) delimited radially to the outside by an edge (42), the flange (16) having an external diameter designated "flange diameter (D1)";
- a body (12) having a maximum external diameter, designated "body diameter (D2)", which is less than the flange diameter (Dl);
the aligning and straightening device (18) comprising:
- a horizontal circular turntable (24) turning about a vertical axis, intended to drive the preforms (10) from upstream to downstream;
- a fixed rail (36), of which an upper outer support face (37) extends at the same level as an upper inner support face (29) of the turntable (24), the rail (36) forming an arc of a circle centred on the axis (B) of rotation of the turntable (24);
- a peripheral gap (34) delimited radially between an outer edge (25) of the turntable (24) and the rail (36), the gap (34) having a constant radial width between the body diameter (D2) and the flange diameter (Dl) in order to permit the straightening of the preform (10) by passing the body (12) through said gap (34), the flange (16) being supported jointly by the inner support face (29) and by the outer support face (37);
**characterized in that** the guiding of the preform (10) in the gap (34) consists in limiting, in both directions, the radial displacement of the preform (10) along the gap (34) by contact between the peripheral edge (42) of the flange (16) and an inner stop face (38), towards the inside, and by contact between the peripheral edge (42) of the flange (16) and the outer stop face (40), towards the outside.

2. Device (18) for aligning and straightening of preforms (10), for implementation of the method according to the preceding claim, the device (18) having a centrifuge bowl (20) comprising:
- a horizontal circular turntable (24) turning about a vertical axis (B), intended to drive the preforms (10) from upstream to downstream;
- an angular sector (20B) of the bowl, in which the bowl (20) has a peripheral gap (34) delimited between a fixed rail (36) and an outer edge (25) of the turntable (24), the gap (34) being intended to permit tilting of the body (12) of the preforms (10) below the level of the turntable (24), a flange (16) of the preform (10) being intended to be supported jointly by an upper inner support face (29) of the turntable (24) and by an upper outer support face (37) of the rail (36), which extend at the same level;
**characterized in that** the turntable (24) has an inner stop face (38) which extends upwards from the inner support face (29) and which faces outwards, and **in that** the rail (36) has an outer stop face (40) which extends upwards from the outer support face (37) of the rail (36) and which is arranged opposite the inner stop face (38).

3. Device (18) according to the preceding claim, **characterized in that** the inner stop face (38) forms part of an annular shoulder face (44) between a central part (46) of the upper face (27) of the turntable and the inner support face (29) of the turntable (24), the inner support face (29) being arranged below the level of the central part (46).

4. Device (18) according to the preceding claim, **characterized in that** the annular shoulder face (44) of the turntable has a chamfer (50) which connects the inner stop face (38) to the central part (46) of the upper face (27) of the turntable (24).

5. Device (18) according to any one of Claims 2 to 4, **characterized in that** the second outer stop face (40) of the rail (36) is continued upwards by a chamfer (53).

6. Device (18) according to any one of Claims 2 to 5, **characterized in that** the turntable (24) comprises a lower peripheral inner guide (56) which extends below the inner support face (29) and which is intended to limit lifting and/or tilting of the flange (16) of the preforms (10), circulating in the gap (34), relative to the inner support face (29), by contact between the body (12) of the preform (10) and the inner guide (56).

7. Device (18) according to any one of Claims 2 to 6, **characterized in that** the fixed rail (36) comprises a lower peripheral outer guide (58) intended to limit lifting and/or tilting of the flange (16) of the preforms (10), circulating in the gap (34), relative to the outer support face (37), by contact between the body (12) of the preform (10) and the outer guide (58).

8. Device (18) according to any one of Claims 2 to 7, **characterized in that** the inner support face (29) and the shoulder face (44) are carried by a removable part (54), in order to be able to adapt the turntable (24) to different dimensions of preforms.

9. Device (18) according to any one of Claims 2 to 8, **characterized in that** the fixed rail (36) is mounted in a removable manner, in order to be able to adapt the turntable (24) to different dimensions of preforms.
